# EUROPÄISCHE PATENTSCHRIFT

(11) **EP 2 110 598 B1**
(45) Veröffentlichungstag und Bekanntmachung des Hinweises auf die Patenterteilung: **18.02.2015**
(21) Anmeldenummer: 09005049.3
(22) Anmeldetag: 06.04.2009
(51) Int. Cl.: F21S 4/00, F21S 10/04, F21V 7/10, G02B 6/00, F21L 4/00, F21V 5/00, F21W 121/00

(54) **Leuchtvorrichtung**
Lighting device
Dispositif d'éclairage

(30) Priorität: 15.04.2008 AT 5922008
(43) Veröffentlichungstag der Anmeldung: 21.10.2009
(73) Patentinhaber: D. Swarovski KG, 6112 Wattens (AT)
(72) Erfinder: Swarovski, Helmut, 6122 Fritzens (AT)
(74) Vertreter: Hofinger, Stephan

(56) Entgegenhaltungen:
- WO-A1-2006/104898
- DE-U1-202005 011 293
- US-A1- 2003 179 581

## Beschreibung

Die Erfindung betrifft eine Leuchtvorrichtung umfassend einen im sichtbaren Spektralbereich wenigstens im Wesentlichen transparenten Körper und eine außerhalb des Körpers angeordnete Lichterzeugungsvorrichtung, wobei im Inneren des Körpers ein Leuchtbereich ausgebildet ist und wobei im Körper durch die Anordnung eines Mediums mit geringerem Brechungsindex zumindest abschnittsweise eine im Wesentlichen polyederförmige, zylinderförmige oder kegelförmige Grenzfläche ausgebildet ist, welche von der Lichterzeugungsvorrichtung emittierte und in den Körper eingetretene Strahlung wenigstens abschnittsweise totalreflektiert, wobei diese totalreflektierte Strahlung unter zumindest teilweiser Ausbildung des Leuchtbereichs aus dem Körper austritt.

Seit längerer Zeit werden Kerzen mehr und mehr durch elektrische Leuchtvorrichtungen ersetzt, einerseits aus Sicherheitsgründen, da der Umgang mit offenem Feuer stets Gefahren mit sich bringt, andererseits aus Gründen der Bequemlichkeit. Besonders häufig sind derartige elektrische Kerzen bei Lustern oder auch bei Christbaumschmuck in Verwendung. Als nachteilig hat sich dabei erwiesen, dass das Aussehen der elektrischen Kerzen sowie deren Lichtabstrahlung von vielen Menschen als künstlich und unnatürlich angesehen wird. Die AT 411847 B stellt dahingehend eine Verbesserung dar, da sie eine elektrische Leuchtvorrichtung in Kerzenform beschreibt, wobei das von einer Lichtquelle emittierte Licht zumindest teilweise über einen Kerzenschaft in den oberhalb liegenden Leuchtabschnitt gelangt. Als störend hat sich bei dieser Anordnung ergeben, dass das Licht hauptsächlich im spitzen Bereich des Leuchtabschnitts aus der elektrischen Leuchtvorrichtung in Kerzenform austritt, da hier die geometrischen Bedingungen für Totalreflexion nicht mehr erfüllt sind. Eine derartige elektrische Leuchtvorrichtung wird aus diesem Grund ebenfalls häufig als zu wenig authentisch empfunden.

Neben den bekannten Beleuchtungsvorrichtungen wie Glühbirnen, Leuchtdioden oder dergleichen kann auch ein im Wesentlichen massiv ausgebildeter aber transparenter Körper als Leuchtvorrichtung verwendet werden. Um einen derartigen formschönen Körper so auszubilden, dass von seinem Inneren Lichtstrahlen in eine gewählte Richtung austreten, ist es im Stand der Technik beispielsweise bekannt, einen Hohlraum in einem derartigen Körper zu schaffen und in diesem eine Lichterzeugungsvorrichtung, beispielsweise in Form einer Leuchtdiode, anzuordnen. Als nachteilig hat sich dabei erwiesen, dass die Zuleitung von elektrischen Strom in diesem Fall kompliziert zu erfolgen hat. Des Weiteren müssen um eine gewisse Helligkeit zu erreichen, leuchtstarke Leuchtdioden verwendet werden, die eine große Hitzeentwicklung mit sich bringen, was sich generell negativ auf den Körper auswirken kann und bis zu seiner Zerstörung führen kann. Überdies kann man, falls sich die Lichterzeugungsvorrichtung nicht in Betrieb befindet, diese und auch die elektrischen Zuleitungen im Inneren des Körpers erkennen, was als unästhetisch empfunden werden kann.

Als eine weitere Möglichkeit um Lichtstrahlen aus dem Inneren eines Körpers in eine vorgegebene Richtung austreten zu lassen, ist im Stand der Technik bekannt, einen Hohlraum im Inneren des Körpers zu schaffen, der über extern angeordnete Lichterzeugungsvorrichtungen bestrahlt wird. Im Hohlraum sind dabei optische Elemente, wie eine Linse oder ein Prisma angeordnet, welche eine Lichtumlenkung in eine gewünschte Richtung bewirken. Dadurch ist es möglich eine Lichterzeugungsvorrichtung im Inneren eines Körpers zu imitieren. Neben dem komplizierten Aufbau, durch im Inneren angeordnete optische Elemente ergibt sich hier wiederum der Nachteil, dass bei sich nicht im Betrieb befindlicher Lichterzeugungsvorrichtung die Anordnung der optischen Elemente im Hohlraum erkennbar ist.

In der EP 1 714 593 ist ein dekoratives Element gezeigt, das eine transparenten Hängekörper mit einer Vielzahl von im transparenten Körper eingeschlossenen, ungeordneten und unregelmäßigen Luftblasen. Des Weiteren ist eine Lichtquelle vorgesehen, die Licht in den transparenten Körper einstrahlt welches dann von den Luftblasen reflektiert wird. Diese Anordnung hat den Nachteil, dass aufgrund der zufällig angeordneten, eine unregelmäßige Form aufweisenden, Luftblasen, das von diesen reflektierte Licht diffus ist und eine Ausleuchtung eines vordefinierten, bestimmten Winkelbereiches durch das reflektierte Licht prinzipiell nicht möglich ist.

Die GB 2 372 091 A1 zeigt eine Leuchtvorrichtung mit einem optischen Element, welches zur Steuerung der Lichtabstrahlung in horizontaler und vertikaler Richtung dient. Unterhalb des optischen Elements ist eine Leuchtdiode angeordnet, wobei von der Leuchtdiode emittierte Strahlung unter Lichtbrechung in das optische Element eintritt, dort totalreflektiert wird und gegebenenfalls unter einer weiteren Lichtbrechung aus dem transparenten Körper, vorzugsweise in horizontaler Richtung, austritt. Zum Schutz einer drehkegelförmigen Ausnehmung, die zur Realisierung der Totalreflexion dient, ist eine Staubschutzhülle oberhalb der Ausnehmung angeordnet.

Die US 6,002,079 zeigt einen dekorativen Leuchtartikel bestehend aus einem transparenten Körper und einer in einer Ausnehmung angeordneten Lichtquelle, wobei am Rand des transparenten Körpers Ausnehmungen angeordnet sind über die das Licht aus dem Inneren des transparenten Körpers hinaus reflektiert wird.

Die WO 2006/104898 A1 zeigt eine elektrische Kerze, deren Kerzenschaft aus einem Lichtleiter besteht, wobei in einer Ausführungsform am oberen Ende des Lichtleiters ein optisches Element angeordnet ist, das wiederum an seinem oberen Ende eine Ausnehmung aufweist über die Licht mittels Totalreflexion aus dem optischen Element austreten kann.

Aufgabe der Erfindung ist es, die oben genannten Nachteile zu vermeiden und in einer konstruktiv einfachen Art Licht einer außerhalb eines im Wesentlichen transparenten Körpers angeordneten Lichterzeugungsvorrichtung im Inneren des Körpers in einen bestimmten vorgegebenen Winkelbereich umzulenken und dadurch einen Leuchtbereich im Inneren eines Körpers bereit zu stellen, ohne dass dort selbst eine Lichterzeugungsvorrichtung angeordnet ist. Dabei soll der Leuchtbereich formschön ausgebildet sein und vor äußeren Einflüssen geschützt sein, ohne dass dabei die Abstrahlcharakteristik der Leuchtvorrichtung negativ beeinflusst wird.

Dies wird durch eine Leuchtvorrichtung mit den Merkmalen des Anspruchs 1 gelöst.

Durch die außerhalb des Körpers angeordnete Lichterzeugungsvorrichtung kann eine komplizierte und unschöne elektrische Stromzufuhr in das Innere des Körpers vermieden werden, wodurch auch die Kühlproblematik einer sich stark erhitzenden Lichtquelle im Inneren eines Körpers nicht mehr relevant ist. Tritt nun Licht von einer außerhalb des Körpers angeordneten Lichterzeugungsvorrichtung in diesen ein, so trifft es im Inneren eines erfindungsgemäßen Körpers auf eine Grenzfläche zu einem Medium mit geringerem Brechungsindex als jener des im Wesentlichen transparenten Körpers. Bei diesem Übergang von einem optisch dichteren zu einem optisch dünneren Medium wird bei geeigneter geometrischer Anordnung der Grenzfläche zumindest abschnittsweise der Winkel des von der Lichterzeugungsvorrichtung kommenden auf die Grenzfläche auftreffenden Lichtes größer als der Grenzwinkel für Totalreflexion, wobei der Winkel von einer Senkrechten auf die Grenzfläche gemessen wird. Das daraufhin totalreflektierte Licht trifft dann auf die Außenfläche des Körpers und kann - bei geeigneter Form der Außenfläche - aus dem Körper austreten, wodurch die Grenzfläche zumindest Teile eines Leuchtbereichs ausbildet.

Durch eine zumindest abschnittsweise polyederförmige, kegelförmige oder zylinderförmige Grenzfläche wird erreicht, dass die geometrische Bedingung für Totalreflexion nicht nur punktweise sondern für ausgedehnte Bereiche erfüllt ist, da sich der Winkel des auf eine erfindungsgemäße Grenzfläche auftreffenden Lichtes nur langsam und stetig ändert, wodurch auch der von der erfindungsgemäßen Leuchtvorrichtung bestrahlte Bereich räumlich ausgedehnt ist. In der gesamten Offenbarung wird dabei unter einer zylinderförmigen Fläche eine gekrümmte Fläche verstanden, welche durch Parallelverschiebung einer Geraden längs einer Kurve entsteht. Demgegenüber entsteht eine kegelförmige Fläche durch die Bewegung einer Geraden, die durch einen festen Punkt geht und längs einer Kurve geführt wird. Eine polyederförmige Fläche schlussendlich stellt die Oberfläche eines Polyeders dar, also einer Körpers der von Ebenen begrenzt ist. Der gemeinsame Hintergrund dieser Flächen ist, dass zumindest in einer Richtung eine sich nur langsam ändernde Krümmung vorhanden sein muss, damit die Bedingung für Totalreflexion nicht nur punktweise sondern in einem ausgedehnten Gebiet erfüllt ist.

Durch verschiedene Formen und Größen derartiger Grenzflächen können die vo n diesen Grenzflächen beleuchteten Bereiche variiert werden. Komplizierte Linsen oder Prismen im Inneren des Körpers sind nicht mehr nötig. Befindet sich die Lichterzeugungsvorrichtung nicht im Betrieb, so sind im Inneren des Körpers keine störend wirkenden optischen Elemente oder Lichtquellen erkennbar.

In dem nun vorgesehen ist, dass die Grenzfläche eine Kavität im Inneren des Körpers ausbildet und dadurch der transparente Körper den erfindungsgemäßen Leuchtbereich völlig umschließt, ist sichergestellt, dass keine äußeren Einflüsse den Leuchtbereich beeinflussen können. Beispielsweise können sich kein Staub oder ähnliche Verschmutzungen auf dem Leuchtbereich, d.h. auf der Grenzfläche, ablagern. Zusätzlich zu den für einen dekorativen Artikel unerwünschten Verschmutzungen können sich durch eine derartige Schmutzschicht auch die geometrischen Bedingungen für die Totalreflexion so ändern, dass diese nicht mehr erfüllbar sind und die Leuchtvorrichtung nicht mehr ordnungsgemäß funktionieren kann. Außerdem ist durch die völlige Umschließung der Grenzflächen und damit des Leuchtbereichs durch den transparenten Körper der Leuchtbereich besonders formschön im Inneren des transparenten Körpers untergebracht. Eine Staubschutzhülle oder ähnliche den haptischen Eindruck störende Vorrichtungen sind nicht mehr nötig.

Ein weitere Vorteil der sich durch die völlige Umschließung der Grenzflächen durch den transparenten Körper ergibt ist, dass Lichtstrahlen, die seitlich an den Grenzflächen vorbeilaufen ohne dort totalreflektiert zu werden, können, nachdem sie an der oberhalb der Kavität liegenden Wandung des transparenten Körpers reflektiert oder totalreflektiert werden, an die Grenzfläche zurückgeworfen werden und dann an der Grenzfläche zur Kavität totalreflektiert werden und aus dem transparenten Körper austreten. Dadurch wird die Intensität des vom Leuchtbereich austretenden Lichts erhöht, ebenso wie die Intensität der in einem bestimmten vorgegebenen Winkelbereich umgelenkten Strahlung. Ohne die völlige Umschließung der Kavität würden die an der Kavität vorbeilaufenden Strahlen nämlich nicht umgelenkt bzw. an einem Schutzelement wie einer Abdeckhaube absorbiert.

Eine besonders vorteilhafte Ausführungsform ergibt sich dadurch, dass der im Wesentlichen transparente Körper ein Glaskörper ist. Glas zeichnet sich dabei als günstig in der Herstellung und äußerst vielfältig in seinen Anwendungs- und Gestaltungsmöglichkeiten aus. Je nach verwendeter Glasart verändert sich auch die Charakteristik des von der Leuchtvorrichtung austretenden Lichtes, da die Brechzahlen für Gläser im Bereich von 1,4 bis 1,9 liegen. Während Quarzglas einen Brechungsindex von 1,46 aufweist, liegt der Brechungsindex von Flintglas zwischen 1,61 und 1,76. Dabei gelten die in dieser Offenbarung angegebenen Brechungszahlen für die gelbe Natriumlinie mit einer Wellenlänge von 589,3 nun bei 20°C für feste Stoffe und Flüssigkeiten und bei 0° C für gasförmige Stoffe. Natürlich kann als transparentes Material auch ein geeigneter Kunststoff oder Edelstein eingesetzt werden. Diamant wäre sogar äußerst vorteilhaft, da es einen besonders hohen Brechungsindex von 2,41 aufweist, wäre aber natürlich mit viel höheren Herstellungskosten verbunden als Glas.

In einer Ausführungsform kann es vorgesehen sein, den Körper facettiert zu schleifen, wodurch der Körper besonders formschön und ästhetisch wirkt. Dies gilt insbesondere für facettiert geschliffene Glaskörper, die allgemeine als formschöner Ersatz für Edelsteine anerkannt sind.

Eine weitere Ausführungsform sieht vor, dass der aus transparentem Material bestehende Körper zumindest teilweise aus farbigem Material besteht, wodurch ebenso vielfältige Erscheinungsbilder des von aus transparentem Material bestehenden Körper ausgestrahlten Lichtes möglich sind.

In einer bevorzugten Ausführungsform der Erfindung ist vorgesehen, dass der Leuchtbereich zentral im Inneren des Körpers angeordnet ist. Dadurch kann je nach Ausgestaltung der Grenzfläche eine besonders symmetrische Lichtabstrahlung gewährleistet werden. Außerdem wird ein Körper, insbesondere mit facettiert geschliffener Oberfläche, der einen erfindungsgemäßen Leuchtbereich völlig umschließt als sehr hochwertiger kristallförmiger Körper empfunden, da ja bei nicht im Betrieb befindlicher Lichterzeugungsvorrichtung keine störenden Elemente im Inneren des Körpers erkennbar sind.

Besonders vorteilhaft ist dabei, wenn die erfindungsgemäße Kavität leer ist und zusätzlich oder alternativ mit einem gasförmigen Stoff gefüllt ist. Da Vakuum einen Brechungsindex von 1 und Luft einen Brechungsindex von 1,0003 aufweist ist das Verhältnis der Brechungszahlen von optisch dichtem zu optisch dünnem Medium hinreichend groß um die Totalreflexion in einem ausreichenden Winkelbereich für das auf die Grenzfläche auftreffende Licht zu ermöglichen. Es kann aber auch vorgesehen sein, dieses Verhältnis durch andere gasförmige Stoffe zu verändern oder auch farbige Stoffe mit geringerem Brechungsindex als jener des die Kavität zumindest teilweise umgebenden Körpers in die Kavität zu geben. So kann die Kavität beispielsweise auch mit flüssigen Stoffen wie Wasser gefüllt sein, da der Brechungsindex für Wasser 1,33 und somit geringer als jener von Glas ist.

In einer bevorzugten Ausführungsform ist die Grenzfläche symmetrisch bezüglich einer gedachten Achse des Körpers ausgebildet. Dadurch wird ein symmetrischer Leuchtbereich und somit ein symmetrisches Beleuchten rund um den Körper ermöglicht. Dies gilt insbesondere falls auch der Körper symmetrisch ist und die Grenzfläche dieselbe Symmetrieachse wie der Körper besitzt.

Eine weitere besonders vorteilhafte Ausführungsform der Erfindung sieht vor, dass die Grenzfläche im Wesentlichen glatt ausgebildet ist. Dabei bedeutet glatt, dass parallel einfallende, benachbarte Strahlen nach der Totalreflexion wieder annähernd parallel sind und ebenso, dass die geometrische Bedingung für Totalreflexion nicht nur punktuell, sondern in einem ausgedehnten Bereich der Grenzfläche erfüllt sind. Dadurch wird gewährleistet, dass das vom Leuchtbereich stammende Licht nicht diffus wirkt sondern einen brillanten Eindruck hinterlässt und damit besonders formschön und dekorativ wirkt. Eine rauhe Grenzfläche demgegenüber bewirkt, dass das von der Lichtquelle stammendem Licht in verschiedenste Richtungen totalreflektiert wird und daher diffus aus dem Körper austritt.

In einer bevorzugten Ausführungsform der Erfindung ist vorgesehen den Körper aus mehreren Teilen zusammenzusetzen. Dadurch kann der sich im Inneren des Körpers befindende Leuchtbereich samt der Grenzfläche zum Bereich mit geringerem Brechungsindex in einfacher Weise hergestellt werden. In wenigstens zwei der mehreren Teile sind Teile der Grenzflächen ausgebildet die dann bei zusammengesetztem Körper die gesamte erfindungsgemäße Grenzfläche ausbilden. In wenigstens zwei Außenflächen sind einander entsprechende Ausnehmungen vorgesehen. Die entsprechenden Außenflächen werden dann zusammengesetzt, wobei einander entsprechende Ausnehmungen eine Kavität im Inneren des Körpers ausbilden. Es kann vorgesehen sein die Teile des Körpes, beispielsweise durch Verkleben aneinander zu befestigen.

In einer weiteren Ausführungsform kann vorgesehen sein, dass die Grenzfläche die die Kavität umschließt, die Form eines Doppelkegels hat. Ist die Lichtquelle unterhalb der Spitzen des Doppelkegels angeordnet, so können Lichtstrahlen an der der Lichterzeugungsvorrichtung näher liegenden Außenfläche des Doppelkegels totalreflektiert werden, sodass das Licht aus dem Inneren des Körpers zum Großteil in einer Richtung im Wesentlichen senkrecht zur Symmetrieachse des Doppelkegels austritt. Ein Doppelkegel hat zudem den Vorteil, dass Licht, welches von einer der Lichterzeugungsvorrichtung entfernten Seite des Körpers reflektiert wird, und von dort auf die von der Lichterzeugungsvorrichtung entfernte Seite des Doppelkegels trifft, dort ebenso wieder die Bedingungen für Totalreflexion vorfindet. Dies hat zur Folge, dass das ausgestrahlte Licht besonders symmetrisch und formschön aus dem Körper austritt.

In einer bevorzugten Ausführungsform der Erfindung ist vorgesehen, dass die Lichtquelle direkt am Körper anliegt. Dadurch kann das Licht von der Lichtquelle optimal in den Körper, eintreten und ein besonders großer Anteil des von der Lichterzeugungsvorrichtung emittierten Lichtes kann von der erfindungsgemäßen Leuchtvorrichtung umgelenkt werden.

Besonders vorteilhaft ist es, wenn die Lichtquelle zumindest eine Leuchtdiode (LED) umfasst. Leuchtdioden zeichnen sich einerseits durch große Leuchtkraft bei äußerst geringem Stromverbrauch aus, andererseits sind Leuchtdioden besonders kleine Lichtquellen und ermöglichen daher eine kompakte Bauweise einer erfindungsgemäßen Leuchtvorrichtung.

Es kann auch vorgesehen sein, dass die Lichtquelle mehrere Leuchtdioden umfasst, welche Licht verschiedener Farbe emittieren können. Dadurch dass der Grenzwinkel für Totalreflexion von der Wellenlänge des Lichts abhängt, tritt Licht mit unterschiedlicher Farbe, also unterschiedlicher Wellenlänge, in verschiedenen Richtungen aus dem Körper aus, wodurch sich äußerst reizvolle dispersive Effekte ergeben. Zudem kann eine Regeleinrichtung vorgesehen sein, welche die Farbe und die Helligkeit des von den Leuchtdioden emittierten Lichtes regelt, wodurch wiederum vielfältige optische Eindrücke herstellbar sind. Des Weiteren kann vorgesehen sein, dass die Stromversorgung die Lichtquellen derart ansteuert, dass diese flackerndes Licht abgibt. Dadurch ergibt sich der optische Eindruck eines natürlichen Flackerns, wie einer Flamme einer Wachskerze, was wiederum die Imitation einer solchen durch eine erfindungsgemäße Leuchtvorrichtung verbessert.

In einer weiteren Ausführungsform der Erfindung ist vorgesehen, dass der im Wesentlichen transparente Körper zumindest teilweise aus farbigem Material besteht, wodurch wiederum reizvolle optische und dekorative Gestaltungsmöglichkeiten gegeben sind.

In einer weiteren Ausführungsform der Erfindung ist vorgesehen, dass die Leuchtvorrichtung oben, das heißt an der von der Lichterzeugungsvorrichtung weiter entfernten Seite, konisch zu einer Spitze verjüngt ist. Dadurch kann besonders gut eine natürliche Flamme imitiert werden, weil an der sich konisch verjüngenden Spitze die geometrischen Bedingungen für Totalreflexion nicht mehr erfüllt sind und das von der Lichterzeugungsvorrichtung emittierte Licht neben dem erfindungsgemäßen Leuchtbereich auch verstärkt an der konisch verjüngten Spitze austritt. Zudem wird an der sich konisch verjüngenden Spitze reflektiertes Licht auf die Grenzfläche zur Kavität zurückgeworfen und tritt dort unter Ausbildung des Leuchtbereichs, nachdem es an der Grenzfläche totalreflektiert wurde, aus dem transparenten Körper seitlich aus.

In einer weiteren vorteilhaften Variante der Erfindung ist vorgesehen, dass an der Leuchtvorrichtung ein Kerzenschaft angeordnet ist und die Leuchtvorrichtung einen oberhalb des Kerzenschaftes liegenden Leuchtabschnitt einer kerzenförmigen, elektrischen Leuchtvorrichtung bildet, ähnlich einer Anordnung wie sie in der AT 411 847 B dargestellt wird. Dabei kann die Leuchtvorrichtung einen eine Flamme stilisierenden Leuchtabschnitt bilden, wobei durch die Anordnung des Leuchtbereichs im Körper der Leuchtvorrichtung und das dadurch erfolgende seitliche Austreten des Lichts besonders gut eine Kerze mit natürlicher Flamme nachgebildet werden kann. Dabei kann es vorgesehen sein, dass die Lichterzeugungsvorrichtung im unteren Bereich, vorzugsweise ausschließlich unterhalb, des Kerzenschaftes angeordnet ist und zusätzlich am Kerzenschaft anliegt, wodurch das von der Lichterzeugungsvorrichtung emittierte Licht besonders günstig in der Kerzenschaft eintritt und zumindest teilweise über diesen in den oberhalb liegenden Leuchtabschnittes gelangt. Dadurch wird es ermöglicht die Lichterzeugungsvorrichtung nach außen nicht sichtbar anzuordnen, wodurch die den Leuchtabschnitt bildende Leuchtvorrichtung indirekt beleuchtet wird und der sich in dieser Leuchtvorrichtung befindende erfindungsgemäße Leuchtbereich kann besonders gut zur Geltung kommen. Da je nach geometrischer Form und Anordnung der Grenzfläche in einer erfindungsgemäßen Leuchtvorrichtung das Licht des Leuchtbereichs in eine bestimmte Richtung aus der Leuchtvorrichtung austritt, können äußerst ansprechende optische Effekte erzielt werden.

Es kann auch vorgesehen sein, dass die Lichtzufuhr zum Leuchtabschnitt ausschließlich durch den Kerzenschaft erfolgt. Das von unten in den Kerzenschaft eintretende Licht wird beispielsweise über Totalreflexion in den oberen Leuchtabschnitt geführt, wo es schließlich zumindest teilweise über den erfindungsgemäßen Leuchtbereich aus der Leuchtvorrichtung heraustritt. Dies beschränkt die Lichtabgabe auf den Leuchtabschnitt und hier wiederum insbesondere auf den Leuchtbereich, was einen optisch äußerst ansprechenden Effekt ergibt. Natürlich könnte der Kerzenschaft zumindest teilweise auch mit einer spiegelnden Schicht bedeckt sein.

Eine weitere Möglichkeit wäre es, eine Lichterzeugungsvorrichtung in einer am Kerzenschaft befindlichen Bohrung anzuordnen, wobei die Versorgung der Lichterzeugungsvorrichtung mit Strom beispielsweise durch auf den Kerzenschaft aufgedampfte Leiterbahnen erfolgen kann.

Eine weitere vorteilhafte Ausführungsform der Erfindung sieht vor, den oben erwähnten Kerzenschaft aus einem im sichtbaren Spektralbereich im Wesentlichen transparenten Material auszuführen. Es kann insbesondere vorgesehen sein, dass dieses Material Glas ist. Um eine besonders formschöne erfindungsgemäße Leuchtvorrichtungen in Kerzenform zu erhalten, kann weiters vorgesehen sein, dass der Kerzenschaft facettiert geschliffen ist.

Dabei kann es vorgesehen sein, dass die den Leuchtabschnitt bildende Leuchtvorrichtung und der Kerzenschaft einstückig ausgebildet sind, wodurch sich besonders vielfältige Designmöglichkeiten ergeben. Es kann aber auch vorgesehen sein, dass der Kerzenschaft getrennt von der Leuchtvorrichtung, welche den Leuchtabschnitt bildet, hergestellt wird und der Leuchtabschnitt als gesonderter Teil am Kerzenschaft beispielsweise durch Ankleben befestigt wird.

Um die erfindungsgemäße Leuchtvorrichtung möglichst unabhängig vom Stromnetz betreiben zu können und an beliebigen Stellen zu platzieren, kann in einer Ausführungsform der Erfindung vorgesehen sein, dass die Stromversorgung über Batterien oder Akkumulatoren erfolgt, Beispielsweise können derartige Batterien oder Akkumulatoren unterhalb eines Kerzenschaftes angeordnet sein. Natürlich ist es auch möglich, die Stromversorgung extern über Leitungen durchzuführen.

Weitere Einzelheiten und Vorteile der vorliegenden Erfindung werden anhand der Figurenbeschreibung unter Bezugnahme auf die Zeichnungen im Folgenden näher erläutert.

Darin zeigen:
- Fig. 1a bis 1c: eine Seitenansicht, eine Draufsicht sowie eine Schnittdarstellung entlang der Achse D-D aus Fig. 1a einer erfindungsgemäßen Leuchtvorrichtung an welcher ein Kerzenschaft angeordnet ist und
- Fig. 2a und 2b: einen Querschnitt sowie eine Draufsicht einer Leuchtvorrichtung nach dem Stand der Technik.

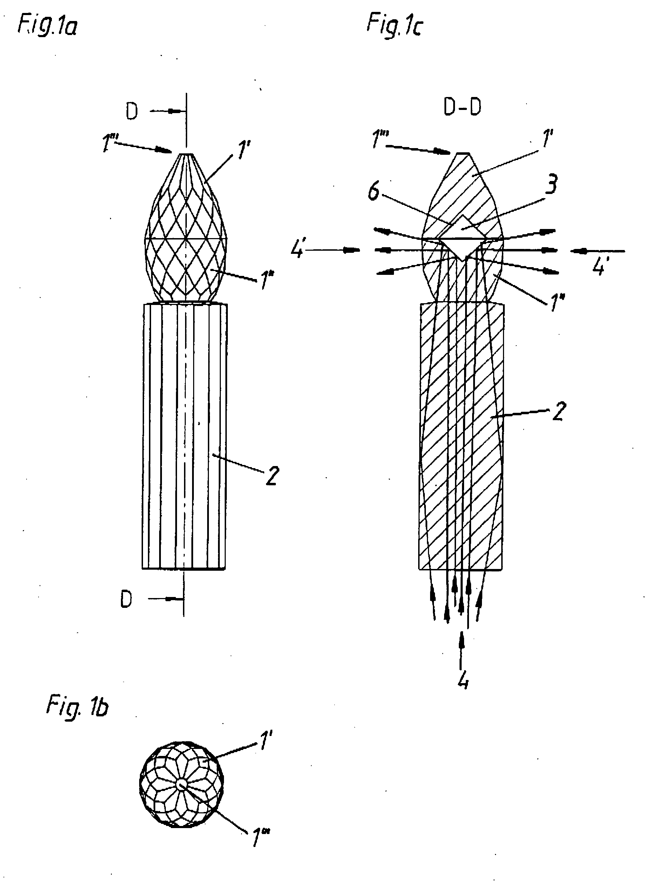

Fig. 1a zeigt eine Leuchtvorrichtung 1, welche zwei Teilen 1',1" umfasst, die beispielsweise durch Ankleben zusammengefügt sind. Die zwei Teile 1', 1" sind dabei jeweils facettiert geschliffene Glaskörper. An der Leuchtvorrichtung 1 ist weiters unterhalb der Leuchtvorrichtung 1 ein Kerzenschaft 2 angeordnet, der ebenfalls aus facettiert geschliffenem Glas hergestellt ist. Der Kerzenschaft 2 ist dabei beispielsweise ebenfalls durch Ankleben an der Leuchtvorrichtung 1 befestigt. In Fig. 1b ist eine Draufsicht der obigen erfindungsgemäßen Leuchtvorrichtung 1 dargestellt. In der in Fig. 1c dargestellten Schnittdarstellung entlang der Achse D-D aus Fig. 1a ist die Grenzfläche 6 dargestellt, die in dieser Ausführungsform der Erfindung als Mantelfläche eines Doppelkegels, durch die Anordnung eine Kavität 3, die leer oder beispielsweise ausschließlich mit Luft gefüllt ist, ausgebildet ist. In diesem Ausführungsbeispiel ist die Kavität 3 und damit der Leuchtbereich zentral im Inneren der Leuchtvorrichtung 1 angeordnet. Die von einer unterhalb des Kegelschaftes 2 angeordneten Lichterzeugungsvorrichtung 5 (hier nicht dargestellt) emittierten Lichtstrahlen 4 treten, wie anhand der dargestellten Strahlenverläufe ersichtlich, unten in den Kerzenschaft 2 ein und werden durch Totalreflexion an der Mantelfläche des Kerzenschaftes 2 in die Leuchtvorrichtung 1 geführt. Die Leuchtvorrichtung 1 bildet einen eine Flamme stilisierenden Leuchtabschnitt und ergibt somit zusammen mit dem Kerzenschaft 2 eine kerzenförmige elektrische Leuchtkerze. An der Grenzfläche 6 zum optisch dünneren Medium in der Kavität 3 sind die Bedingungen für Totalreflexion zumindest abschnittsweise erfüllt, worauf die totalreflektierten Strahlen 4' seitlich aus der Leuchtvorrichtung austreten. Lichtstrahlen 4, die durch Totalreflexion an der Außenfläche der Leuchtvorrichtung 1 weiter nach oben geführt werden, treten zum Teil an der in diesem Ausführungsbeispiel konisch verjüngten Spitze 1''' der Leuchtvorrichtung 1 aus, da hier die geometrischen Bedingungen für Totalreflexion nicht mehr erfüllt sind. Neben der hier austretenden Strahlung wird hier aber auch Strahlung nach unten reflektiert und trifft auf den oberen Teil der Grenzfläche 6 und wird hier ebenso zumindest abschnittsweise totalreflektiert (hier nicht durch Strahlenverläufe dargestellt) und tritt aus der Leuchtvorrichtung 1 aus. Dadurch wird die Intensität der von der Grenzfläche 6 der Kavität 3 totalreflektierten und einen Leuchtbereich ausbildenden Strahlen 4' erhöht und zudem wird die Grenzfläche 6 durch das oberhalb der Kavität 3 liegende Material des transparenten Körpers vor äußeren Einflüssen geschützt und es kann sich keine Staubschicht an der Grenzfläche 6 ablagern, wodurch die Totalreflexion negativ beeinflusst werden könnte und beispielsweise die geometrischen Bedingungen für diese Totalreflexion nicht mehr erfüllbar wären.

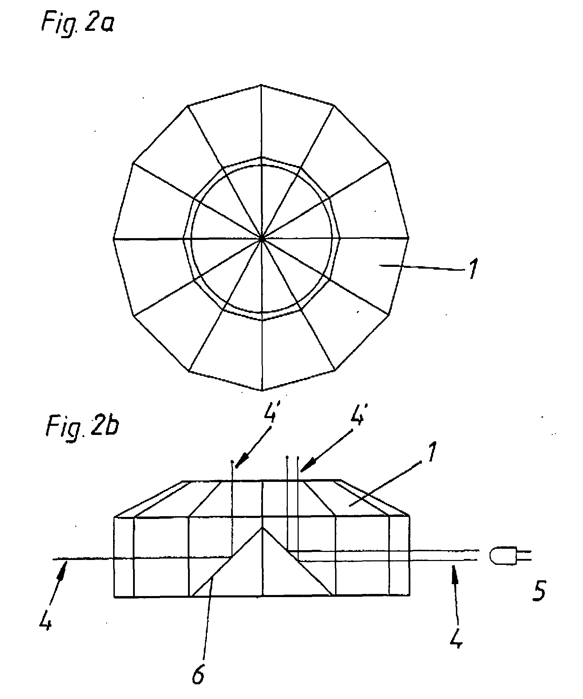

Fig. 2a zeigt die Draufsicht einer aus facettiert geschliffenem Glas hergestellten Leuchtvorrichtung 1 nach dem Stand der Technik. In der in Fig. 2b dargestellten Querschnittsdarstellung ist die Grenzfläche 6 die durch die Anordnung einer kegelförmigen Ausnehmung ausgebildet ist, dargestellt. Von einer Lichterzeugungsvorrichtung 5 emittierte Lichtstrahlen 4 treten in die Leuchtvorrichtung 1 ein und werden zumindest abschnittsweise an der Grenzfläche 6 totalreflektiert, da in der Ausnehmung ein Medium mit geringerem Brechungsindex angeordnet ist. Es können auch mehrere Lichterzeugungsvorrichtungen beispielsweise an gegenüberliegenden Seiten der Leuchtvorrichtung 1 vorgesehen sein. Die durch die Totalreflexion umgelenkten Lichtstrahlen 4' treten an der Oberseite der Leuchtvorrichtung 1 aus und bilden dabei zumindest teilweise einen Leuchtbereich im Inneren der Leuchtvorrichtung 1 aus, wodurch eine Lichtquelle im Inneren der Leuchtvorrichtung imitiert wird. Dadurch dass der transparente Körper die Ausnehmung nicht vollständig umschließt und dadurch keine Kavität ausgebildet ist, ist die Grenzfläche 6 nicht vor äußeren Einflüssen geschützt und es können sich sehr leicht eine Staubschicht oder andere Verschmutzungen an dieser Grenzfläche 6 ablagern, wodurch die Bedingungen für die Totalreflexion gestört wären. Licht, das nicht von der Lichterzeugungsvorrichtung 5 in den Körper eintritt, kann außerdem seitlich an der Ausnehmung vorbeilaufen und tritt einfach an der Unterseite des Körpers aus, ohne dass es auf die Grenzfläche 6 zurückreflektiert werden könnte und dadurch die Intensität der vom Leuchtbereich ausgestrahlten Strahlung 4' verstärken könnte.

In allen Figuren ist aus Gründen der Übersichtlichkeit auf eine Darstellung der die Lichtquellen versorgenden Batterien bzw. bei externer Stromversorgung der Kabel verzichtet worden,

Die vorliegende Erfindung beschränkt sich nicht auf die gezeigten Ausführungsbeispiele sondern umfasst bzw. erstreckt sich auf alle Varianten und technischen Äquivalente, die in die Reichweite der nachfolgenden Ansprüche fallen können.

Auch sind die in der Beschreibung gewählten Lageangaben wie zum Beispiel oben, unten, seitlich, usw. auf die unmittelbar beschriebene sowie dargestellte Figur bezogen und sind bei einer Lageränderung sinngemäß auf die neue Lage zu übertragen.

## Patentansprüche

1. Leuchtvorrichtung (1) umfassend einen im sichtbaren Spektralbereich wenigstens im Wesentlichen transparenten Körper und eine außerhalb des Körpers angeordnete Lichterzeugungsvorrichtung (5), wobei im Inneren des Körpers ein Leuchtbereich ausgebildet ist und wobei im Körper durch die Anordnung eines Mediums mit geringerem Brechungsindex zumindest abschnittsweise eine im Wesentlichen polyederförmige, zylinderförmige oder kegelförmige Grenzfläche (6) ausgebildet ist, welche von der Lichterzeugungsvorrichtung (5) emittierte und in den Körper eingetretene Strahlung wenigstens abschnittsweise totalreflektiert, wobei diese totalreflektierte Strahlung unter zumindest teilweiser Ausbildung des Leuchtbereichs aus dem Körper austritt, **dadurch gekennzeichnet, dass** die Grenzfläche (6) eine Kavität (3) im Inneren des Körpers ausbildet.

2. Leuchtvorrichtung nach Anspruch 1, **dadurch gekennzeichnet, dass** der Körper ein, vorzugsweise facettiert geschliffener, Glaskörper ist.

3. Leuchtvorrichtung nach Anspruch 1 oder 2, **dadurch gekennzeichnet, dass** der Leuchtbereich zentral im Inneren des Körpers angeordnet ist.

4. Leuchtvorrichtung nach einem der Ansprüche 1 bis 3, **dadurch gekennzeichnet, dass** die Kavität (3) leer und/oder mit einem gasförmigen Stoff gefüllt ist.

5. Leuchtvorrichtung nach einem der Ansprüche 1 bis 4, **dadurch gekennzeichnet, dass** die Grenzfläche (6) im Wesentlichen symmetrisch bezüglich einer gedachten Achse durch den Körper ausgebildet ist.

6. Leuchtvorrichtung nach einem der Ansprüche 1 bis 5, **dadurch gekennzeichnet, dass** der Körper mehrere Teile (1',1") umfasst, wobei die Grenzfläche (6) durch Flächen von wenigstens zwei der mehreren Teile (1',1") ausgebildet wird.

7. Leuchtvorrichtung nach einem der Ansprüche 1 bis 6, **dadurch gekennzeichnet, dass** die Kavität (3) die Form eines Doppelkegels oder einer doppelseitigen Pyramide hat.

8. Leuchtvorrichtung nach einem der Ansprüche 1 bis 7, **dadurch gekennzeichnet, dass** die Lichterzeugungsvorrichtung (5) am Körper anliegt.

9. Leuchtvorrichtung nach einem der Ansprüche 1 bis 8, **dadurch gekennzeichnet, dass** die Lichterzeugungsvorrichtung (5) zumindest eine Leuchtdiode (LED) umfasst.

10. Leuchtvorrichtung nach einem der Ansprüche 1 bis 9, **dadurch gekennzeichnet, dass** eine Regeleinrichtung vorgesehen ist, die die Helligkeit und die Farbe der von der Lichterzeugungsvorrichtung (5), vorzugsweise von der oder den Leuchtdioden, emittierten Strahlung (4) regelt.

11. Leuchtvorrichtung nach einem der Ansprüche 1 bis 10, **dadurch gekennzeichnet, dass** der Körper oben konisch zu einer Spitze (1''') verjüngt ist.

12. Leuchtvorrichtung nach einem der Ansprüche 1 bis 11, **dadurch gekennzeichnet, dass** an der Leuchtvorrichtung (1) ein Kerzenschaft (2) angeordnet ist, wobei die Leuchtvorrichtung (1) einen eine Flamme stilisierenden Leuchtabschnitt bildet und die Lichterzeugungsvorrichtung (5) im von der Leuchtvorrichtung (1) entfernten unteren Bereich, vorzugsweise ausschließlich unterhalb, des Kerzenschaftes (2) angeordnet ist und an diesem vorzugsweise anliegt, wobei die von der Lichterzeugungsvorrichtung (5) emittierte Strahlung (4) zumindest teilweise über den Kerzenschaft (2) in die oberhalb liegende Leuchtvorrichtung (1) gelangt.

13. Leuchtvorrichtung nach Anspruch 12, **dadurch gekennzeichnet, dass** die Lichtzufuhr zur Leuchtvorrichtung (1) ausschließlich durch den Kerzenschaft (2) erfolgt.

14. Leuchtvorrichtung nach Anspruch 12 oder 13, **dadurch gekennzeichnet, dass** der Kerzenschaft (2) aus transparentem Material, vorzugsweise aus Glas, besteht.

15. Leuchtvorrichtung nach einem der Ansprüche 1 bis 14, **dadurch gekennzeichnet, dass** die Stromversorgung der Lichterzeugungsvorrichtung (5) über, vorzugsweise im unteren Bereich oder unterhalb des Kerzenschafts (2) angeordnete, Batterien oder Akkumulatoren erfolgt.

## Claims

1. A light-emitting device (1) comprising a body which is at least substantially transparent in the visible spectral range and a light-generating device (5) which is arranged outside the body, wherein a light-emitting region is formed inside the body and wherein there is formed in the body, as a result of the arrangement of a medium having a lower index of refraction, at least in certain portions a substantially polyhedral, cylindrical or conical interface (6) which totally reflects radiation which has been emitted by the light-generating device (5) and entered the body, at least in certain portions, wherein this totally reflected radiation issues from the body so as to at least partly form the light-emitting region, **characterized in that** the interface (6) forms a cavity (3) inside the body.

2. The light-emitting device as claimed in claim 1, **characterized in that** the body is a glass body, which is preferably ground in a faceted manner.

3. The light-emitting device as claimed in claim 1 or 2, **characterized in that** the light-emitting region is arranged centrally inside the body.

4. The light-emitting device as claimed in one of claims 1 to 3, **characterized in that** the cavity (3) is empty and/or filled with a gaseous substance.

5. The light-emitting device as claimed in one of claims 1 to 4, **characterized in that** the interface (6) is embodied substantially symmetrically with respect to a notional axis through the body.

6. The light-emitting device as claimed in one of claims 1 to 5, **characterized in that** the body comprises a plurality of parts (1', 1 "), wherein the interface (6) is formed by faces of at least two of the plurality of parts (1', 1").

7. The light-emitting device as claimed in one of claims 1 to 6, **characterized in that** the cavity (3) has the shape of a double cone or a double-sided pyramid.

8. The light-emitting device as claimed in one of claims 1 to 7, **characterized in that** the light-generating device (5) rests against the body.

9. The light-emitting device as claimed in one of claims 1 to 8, **characterized in that** the light-generating device (5) comprises at least one light-emitting diode (LED).

10. The light-emitting device as claimed in one of claims 1 to 9, **characterized in that** a controlling device is provided, which controls the brightness and the color of the radiation emitted by the light-generating device (3), preferably by one or several light-emitting diodes.

11. The light-emitting device as claimed in one of claims 1 to 10, **characterized in that** the body is tapered at the top conically to form a tip (1"').

12. The light-emitting device as claimed in one of claims 1 to 11, **characterized in that** a candle shaft (2) is arranged on the light-emitting device (1), wherein the light-emitting device (1) forms a light-emitting portion stylizing a flame and the light-generating device (5) is arranged in the lower region of the candle shaft (2), wherein the lower region is remote from the light-emitting device (1), preferably exclusively below the candle shaft (2), and preferably rests thereagainst, wherein the radiation (4) emitted by the light-generating device (5) passes into the upper light-emitting device (5) at least partly via the candle shaft (2).

13. The light-emitting device as claimed in claim 12, **characterized in that** light is supplied to the light-emitting device (1) exclusively through the candle shaft (2).

14. The light-emitting device as claimed in claim 12 or 13, **characterized in that** the candle shaft (2) consists of transparent material, preferably of glass.

15. The light-emitting device as claimed in one of claims 1 to 14, **characterized in that** power is supplied to the light-generating device (5) via batteries or accumulators, wherein said batteries or accumulators are preferably arranged in the lower region of or below the candle shaft (2).

## Revendications

1. Dispositif d'éclairage (1)
comprenant un corps au moins sensiblement transparent dans le domaine spectral visible et un dispositif de génération de lumière (5) agencé en dehors du corps, une zone d'éclairage étant réalisée à l'intérieur du corps et une surface limite (6) sensiblement polyèdre, cylindrique ou conique étant réalisée au moins par section dans le corps par l'agencement d'un milieu présentant un plus faible indice de réfraction, laquelle réfléchit totalement au moins par section un rayonnement émis par le dispositif de génération de lumière (5) et entrant dans le corps, ce rayonnement totalement réfléchi sortant du corps en formant au moins partiellement la zone d'éclairage, **caractérisé en ce que** la surface limite (6) forme une cavité (3) à l'intérieur du corps.

2. Dispositif d'éclairage selon la revendication 1, **caractérisé en ce que** le corps est un corps de verre, de préférence facetté et poli.

3. Dispositif d'éclairage selon la revendication 1 ou 2, **caractérisé en ce que** la zone d'éclairage est agencée centralement à l'intérieur du corps.

4. Dispositif d'éclairage selon l'une quelconque des revendications 1 à 3, **caractérisé en ce que** la cavité (3) est vide et/ou remplie d'une substance gazeuse.

5. Dispositif d'éclairage selon l'une quelconque des revendications 1 à 4, **caractérisé en ce que** la surface limite (6) est réalisée de manière sensiblement symétrique par rapport à un axe imaginaire à travers le corps.

6. Dispositif d'éclairage selon l'une quelconque des revendications 1 à 5, **caractérisé en ce que** le corps comporte plusieurs parties (1', 1 "), la surface limite (6) étant formée par des surfaces d'au moins deux des plusieurs parties (1', 1 ").

7. Dispositif d'éclairage selon l'une quelconque des revendications 1 à 6, **caractérisé en ce que** la cavité (3) présente la forme d'un double cône ou d'une pyramide bilatérale.

8. Dispositif d'éclairage selon l'une quelconque des revendications 1 à 7, **caractérisé en ce que** le dispositif de génération de lumière (5) repose sur le corps.

9. Dispositif d'éclairage selon l'une quelconque des revendications 1 à 8, **caractérisé en ce que** le dispositif de génération de lumière (5) comporte au moins une diode électroluminescente (DEL).

10. Dispositif d'éclairage selon l'une quelconque des revendications 1 à 9, **caractérisé en ce qu'**un dispositif de régulation est prévu, lequel régule la luminosité et la couleur du rayonnement (4) émis par le dispositif de génération de lumière (5), de préférence par la ou les diodes électroluminescente.

11. Dispositif d'éclairage selon l'une quelconque des revendications 1 à 10, **caractérisé en ce que** le corps rétrécit en haut en cône pour former une pointe (1"').

12. Dispositif d'éclairage selon l'une quelconque des revendications 1 à 11, **caractérisé en ce qu'**un corps de bougie (2) est agencé sur le dispositif d'éclairage (1), le dispositif d'éclairage (1) formant une section d'éclairage stylisant une flamme et le dispositif de génération de lumière (5) étant agencé dans la zone inférieure éloignée du dispositif d'éclairage (1), de préférence exclusivement en dessous, du corps de bougie (2) et reposant de préférence sur celui-ci, le rayonnement (4) émis par le dispositif de génération de lumière (5) parvenant au moins en partie par le biais du corps de bougie (2) dans le dispositif d'éclairage (1) se trouvant au-dessus.

13. Dispositif d'éclairage selon la revendication 12, **caractérisé en ce que** la lumière est exclusivement amenée au dispositif d'éclairage (1) par le corps de bougie (2).

14. Dispositif d'éclairage selon la revendication 12 ou 13, **caractérisé en ce que** le corps de bougie (2) se compose de matériau transparent, de préférence de verre.

15. Dispositif d'éclairage selon l'une quelconque des revendications 1 à 14, **caractérisé en ce que** l'alimentation en courant du dispositif de génération de lumière (5) est effectuée par des batteries ou accumulateurs agencés de préférence dans la zone inférieure ou en dessous du corps de bougie (2).
